# EUROPEAN PATENT SPECIFICATION

(11) **EP 1 352 835 B1**
(45) Date of publication and mention of the grant of the patent: **21.06.2006**
(21) Application number: 03425214.8
(22) Date of filing: 04.04.2003
(51) Int. Cl.: B65B 35/26, B65B 11/38

(54) **Device for transferring articles and wrapping machine comprising such a device**
Vorrichtung zum Übertragen von Gegenständen und eine mit dieser Vorrichtung versehene Einwickelmaschine
Dispositif pour transférer des articles et machine d' enveloppement munie d' un tel dispositif

(30) Priority: 09.04.2002 IT BO20020185
(43) Date of publication of application: 15.10.2003
(73) Proprietor: AZIONARIA COSTRUZIONI MACCHINE AUTOMATICHE-A.C.M.A.-S.p.A., I-40131 Bologna (IT)
(72) Inventor: Boldrini, Fulvio, 44100 Ferrara (IT)
(74) Representative: Lanzoni, Luciano

(56) References cited:
- EP-A- 0 602 299
- WO-A-99/14141
- GB-A- 411 662
- GB-A- 638 776
- GB-A- 1 442 369
- US-A- 1 587 556
- US-A- 2 620 964
- US-A- 3 338 026
- US-A- 3 992 855

## Description

The present invention relates to a device for taking up, holding and transferring products, and to a wrapping machine comprising such a device.

The invention finds application to advantage in the art field of manufacturing products generally, and in particular, cakes of soap or other items of similar shape and dimensions, to which reference is made specifically in the following specification albeit with no limitation implied.

It is the practice, in systems for manufacturing and packaging products of the type in question, to utilize wrapping machines ordered in series along the production line, by which items can be taken up singly and in succession, wrapped, and transferred to further processing stations.

The prior art embraces machines of rotary design comprising a device by which products are taken up from an infeed station, gripped, and transferred to an outfeed station where a sheet of wrapping paper is positioned by suitable feed means in readiness to envelop and package each successive product.

In particular, reference IT 707138 discloses a rotary wrapping machine comprising a drum rotatable about a relative horizontal axis and furnished with a plurality of pockets. The products are directed toward a lower portion of the drum by a conveyor affording a transport surface that runs tangential to the drum and also extends partially around its surface of revolution to establish a restraining surface. Each pocket is shaped as a box open on the side remote from the axis of rotation of the drum, and affording a bottom wall flanked by three side walls. The product is timed to reach the drum in such a way that it will be taken up by one of the pockets and drawn in rotation along the restraining surface. Initially therefore, the product will bear against one side wall of the pocket and slide along the curved restraining surface until the point is reached where it can be lifted by the pocket and brought to rest on the bottom wall. On reaching the upper portion of the drum, where a sheet of paper is placed by suitable means across the free face of the pocket, the product is engaged by an elevator, anchored pivotably to the drum and insertable thus through an opening afforded by the bottom wall of the pocket, whereupon the product and the relative paper are directed upward together from the pocket by the elevator and positioned between the grippers of a wrapping chain.

The structure presented by the pockets of the device described above is such that sliding contact will be generated between the advancing product and the curved retaining surface, and this can result in the products being damaged. If the products in question are cakes of soap, more particularly, the sliding motion can scratch the surface of the soap or, given the notable operating speeds in play, the soap can even liquefy partially.

Furthermore, in the event that the device has to handle products of small dimensions, less than the width of the pockets, the product cannot be centred in relation either to the pocket or to the sheet of wrapping paper, as it will tend to shift randomly within the pocket.

Another prior art concerning an automatic wrapping machine is described in document US 3992855. This document shows an apparatus for transferring soap bars to be wrapped from two different conveyors positioned at different height, the infeed station at a lower level respect to the outfeed station. The apparatus comprises a rotating drum with a plurality of holding means consisting of two cradle halves which are opened during their descent towards the lower conveyor, so as to position themselves beneath a soap bar-carrying container. At this stage, the composite cradles are closed and move upwardly so as to lift the product towards the second conveyor, where two vertical gripper members take the soap from the pocket and position it on the conveyor.

The object of the present invention is to provide a device for taking up, holding and transferring products, associated in particular with a wrapping machine, such as will avoid any sliding contact between the handled products and any element of the device.

The stated object is realized according to the invention with a device for taking up, holding and transferring products, having the features disclosed in claim 1.

The stated object is realized, similarly, in a rotary wrapping machine furnished with a device according to the present invention the features disclosed in claim 13.

The invention will now be described in detail, by way of example, with the aid of the accompanying drawings, in which:
- figure 1 shows a schematic side elevation of equipment by which products are wrapped singly and in succession, comprising a rotary wrapping machine furnished with a device for taking up, holding and transferring products according to the present invention;
- figure 2 shows the wrapping machine of figure 1 incorporating the device according to the present invention, viewed in an enlarged side elevation and with certain elements omitted;
- figure 3 shows a detail of the device according to the invention in a first operating position, seen in an enlarged view taken on the direction of the arrow denoted E in figure 2 and with certain parts omitted;
- figure 4 shows the detail of figure 3 in a second operating position.

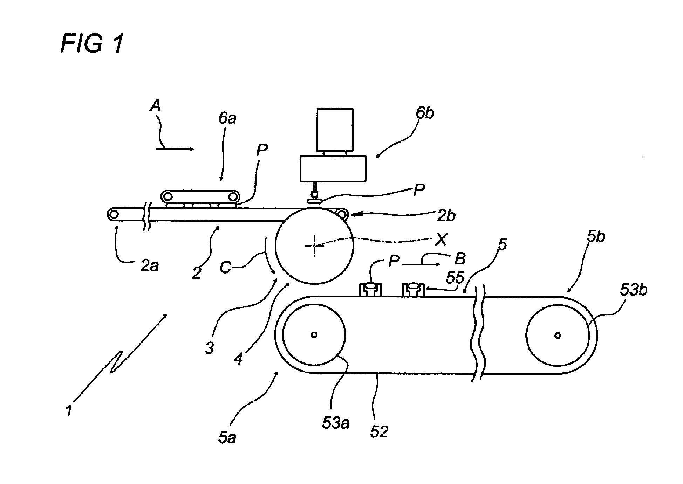

Referring to figure 1 of the drawings, 1 denotes equipment for wrapping products P, in particular cakes of soap conveyed along a relative production line, of which other constituent devices are not described, being conventional in embodiment.

The equipment 1 in question essentially comprises a first conveyor 2 establishing a direction A along which the products P to be wrapped are transferred from a marshalling unit (not illustrated), located at a first end 2a of the first conveyor 2, toward a second end 2b of the conveyor which is connected to a wrapping machine 3 of rotary design.

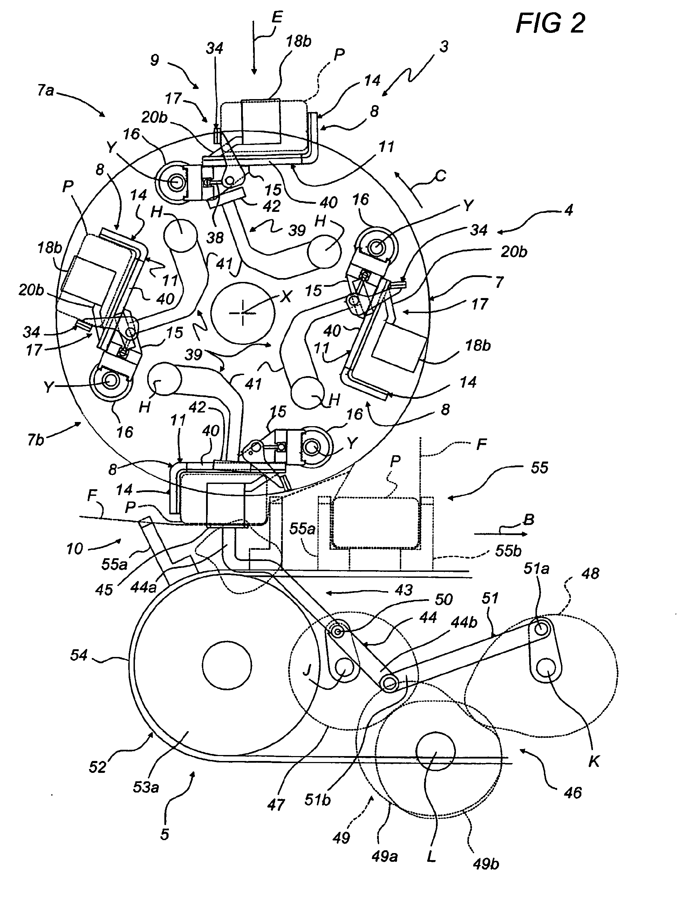

The wrapping machine 3 comprises a device 4 by which the products P are taken up from the first conveyor 2, immobilized and transferred to a second conveyor 5 (figure 2).

In effect, the wrapped products P are conveyed from the wrapping machine 3 to other machine units (not illustrated), advancing along a predetermined transfer path B between a first end 5a and a second end 5b of the second conveyor 5.

The equipment 1 preferably will further comprise first and second feed means 6a and 6b, familiar in embodiment and therefore not described further, operating in conjunction with the first conveyor 2 and serving to advance the products P in ordered succession toward the wrapping machine 3.

More particularly, with reference to figure 2, the device 4 by which the products P are taken up, held and transferred comprises a drum 7, rotating in a predetermined direction C about a horizontal axis X, and a plurality of pockets 8 carried by the drum 7 and arranged around the selfsame axis X.

The products P are gathered by the pockets 8 and thereupon transferred by the rotation of the drum 7 between an infeed station 9, coinciding with a top portion 7a of the drum 7, and an outfeed station 10 coinciding with a bottom portion 7b of the drum 7.

The infeed station 9 coincides with the second end 2b of the first conveyor 2, whilst the outfeed station 10 is positioned facing the first end 5a of the second conveyor 5, with the result that the two conveyors 2 and 5 occupy horizontal planes lying at different heights.

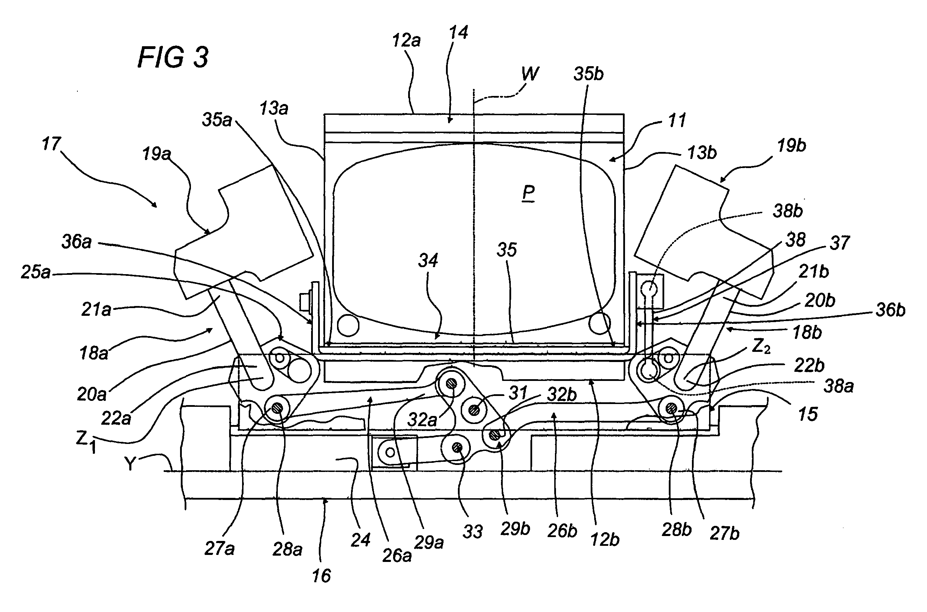

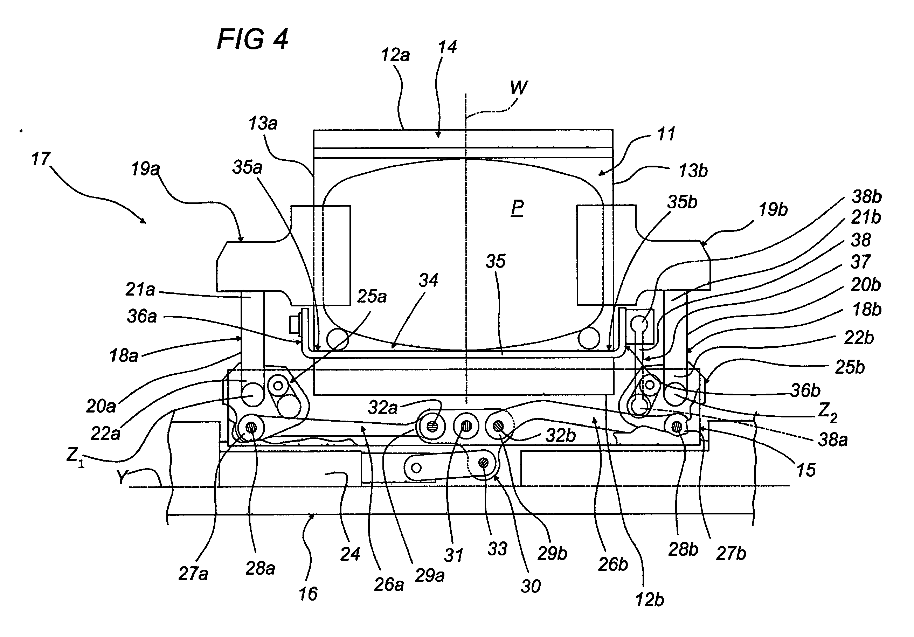

In the example illustrated, the device 4 has four pockets 8, each presenting a base 11 of rectangular geometry (figures 3 and 4) disposed substantially parallel to the axis of rotation X.

More exactly, the rectangular base 11 presents a first side 12a and a second side 12b parallel to the axis of rotation X, also a third side 13a and a fourth side 13b normal to the axis of rotation X.

Also presented by each pocket 8 is a side wall 14 projecting perpendicularly from the first side 12a of the base 11, such as will combine with the base to form a concavity directed away from the axis of rotation X (see figure 2) and positioned thus to receive a product P offered radially to the drum 7.

In the example of the drawings, each product P advanced by the feed means 6a and 6b is caused to drop vertically into the pocket 8 occupying the infeed station 9.

Each of the pockets 8 is attached pivotably to the rotating drum 7 by way of a respective hinge axis Y extending parallel to the axis of rotation X and located forward of the base 11, relative to the direction of rotation C of the drum 7.

The pocket 8 is capable of angular movement about the hinge axis Y between an inner radial position, assumed in order to minimize its radial encumbrance during the transfer movement, and an outer radial position assumed when in alignment with the infeed station 9 or the outfeed station 10 to facilitate the insertion or removal of a product P.

More exactly, each pocket 8 is associated rigidly along the second side 12b of the base 11 with a bracket 15 anchored rigidly in turn to a connecting shaft 16 of which the longitudinal axis coincides with the hinge axis Y of the pocket 8.

When occupying the outer radial position, the base 11 lies parallel to the linear feed direction described by the pocket 8 during the rotation of the drum.

The angle through which the pocket 8 can rotate about the hinge axis Y is limited to a few tens of degrees (30° - 40°), sufficient to minimize the overall dimensions of the drum 7.

The device 4 further comprises a plurality of clamp mechanisms 17, each operating in conjunction with a respective pocket 8 and capable of movement relative to the selfsame pocket 8 between a spread position (see figure 3), allowing the insertion of a product P at the infeed station 9 and the removal of the product P at the outfeed station 10, and a contracted position (see figure 4) in which the product P is immobilized relative to the pocket 8 during the transfer movement.

Referring in particular to figures 3 and 4, each clamp mechanism 17 comprises a first and a second clamp element 18a and 18b operating respectively on the third and fourth sides 13a and 13b presented by the base 11 of the pocket 8.

In particular, the clamp elements 18a and 18b present respective contact portions 19a and 19b by which the product P is engaged from two opposite sides and immobilized in the pocket 8. The contact portions 19a and 19b are profiled to complement the contours of the product P being transferred and will present a contact surface directed toward the base 11 of the pocket 8 in such a manner that the product can be pinned between the selfsame contact surfaces and the base 11 and prevented thus from moving in a direction orthogonal to the base. In a preferred solution, at least the contact surface of each contact portion 19a and 19b will be fashioned from a resilient material so as not to damage the restrained product P, especially in the particular instance of the product being a cake of soap.

To advantage, the two clamp elements 18a and 18b are arranged symmetrically in relation to an axis of symmetry W referable to the base 11, so that the product P can be aligned centrally with respect to the pocket 8.

In particular, the clamp elements 18a and 18b are anchored pivotably to the pocket 8 by way of link arms 20a and 20b affording relative first ends 21a and 21b connected rigidly to the respective contact portions 19a and 19b, and relative second ends 22a and 22b hinged to the bracket 15 about respective axes Z1 and Z2 perpendicular to the base 11, thus enabling rotation between the spread and contracted positions.

Advantageously, the contact portions 19a and 19b are attached removably to the relative arms 20a and 20b and replaceable thus with contact portions 19a and 19b of other geometry, so that products P of different shape can be handled.

To ensure that the two clamp elements 18a and 18b close on the product P simultaneously, the device 4 according to the invention also comprises a first synchronizing linkage 23 operating between the link arms 20a and 20b, also a control rod 24 connected to the first synchronizing linkage 23, by which the arms 20a and 20b are caused to rotate at one and the same time (see figures 3 and 4).

More exactly, the second ends 22a and 22b of the link arms 20a and 20b each present a transmission element 25a and 25b rigidly associated with the relative arm 20a and 20b, hence pivotably anchored to the bracket 15 and rotatable about the relative hinge axes Z1 and Z2. Also constituting part of the linkage are first transmission levers 26a and 26b hinged by way of respective first ends 27a and 27b to the two transmission elements 25a and 25b at corresponding hinge points 28a and 28b afforded by the two respective hinge axes Z1 and Z2. The first transmission levers 26a and 26b are also attached pivotably by way of respective second ends 29a and 29b to a rocker element 30 hinged to the bracket 15 between the two transmission elements 25a and 25b. In particular, the rocker element 30 is anchored to the bracket 15 at a hinge point 31 distinct from the hinge points 32a and 32b at which the first transmission levers 26a and 26b are attached to the selfsame rocker element 30.

The first synchronizing linkage 23 is connected pivotably to the control rod 24, which lies and strokes parallel to the connecting shaft 16, at a respective hinge point 33 on the rocker element 30 distinct from those already mentioned.

The axial movement of the control rod 24, which is generated by conventional means not illustrated in the drawings, causes the rocker element 30 to pivot, shifting the transmission levers 26a and 26b and rotating the link arms 20a and 20b.

In a preferred embodiment, moreover, the clamp mechanism 17 will comprise a third clamp element 34 operating along the second side 12b presented by the base 11 of the pocket 8 and serving to pin the product P against the side wall 14. More precisely, this third clamp element 34 presents a contact portion 35 extending along the second side 12b of the base 11 (see figures 3 and 4) and capable of movement toward and away from the selfsame base 11. When occupying the position nearer to the base, the clamp element 34 lies parallel to the side wall 14 (see also figure 2), gripping the product P between the contact portion 35 and the wall 14.

As discernible from the drawings, the contact portion 35 of the third clamp element 34 consists in a rectangular plate extending predominantly along a direction parallel to the second side 12b of the base 11, attached at its opposite ends 35a and 35b to respective connecting elements 36a and 36b hinged to the bracket 15, and rotatable thus toward and away from the base as already intimated.

The device 4 disclosed further comprises a second synchronizing linkage 37, operating in conjunction with the third clamp element 34 and the first clamp element 18a and/or the second clamp element 18b, by which the pivoting movements of the arms 20a and 20b and of the connecting elements 36a and 36b are generated simultaneously when the control rod 24 is actuated.

As discernible from figures 3 and 4, the second synchronizing linkage 37 comprises an auxiliary control rod 38 of which a first end 38a is hinged to one of the two transmission elements 25a or 25b, and a second end 38b is hinged to the end of the connecting element 36a and 36b opposite to the end associated rigidly with the contact portion 35 of the third clamp element 34.

The movement of the clamp mechanisms 17 and the rotation of the pocket 8, which advantageously are determined by the cyclical movement of the drum 7, will be produced by first synchronizing means of familiar embodiment (not described), designed to operate on the connecting shaft 16 and the control rod 24 of each pocket 8. The first synchronizing means will operate in such a manner that when the pocket 8 is caused by the rotation of the drum 7 to align with the infeed station 9 or with the outfeed station 10, the clamp mechanisms 17 are spread and the pocket 8 occupies the outer radial position, whereas during the transfer of the pocket 8 between the two stations 9 and 10, the clamp mechanisms 17 are drawn together and the pocket 8 occupies the inner radial position.

The device 4 also comprises a plurality of first ejector elements 39, each positioned on the drum 7 near to a relative pocket 8 and capable of movement between a position distanced from the pocket 8, and a position of interaction with the pocket, inserted through an opening 40 afforded by the base 11 (see figure 2).

Each ejector element 39 presents an arm 41 hinged to the drum 7 by a first end 41a and pivotable thus about an axis H parallel to the axis of rotation X of the drum 7. The single element 39 in question also presents a contact plate 42 associated with a second end 41b of the arm 41, opposite to the first end 41a, and insertable through the opening 40 in the base 11 of the pocket.

In effect, the device 4 will also comprise second synchronizing means of familiar embodiment, acting on the ejector elements 39 and on the drum 7, the movement of the ejector element 39 being dependent on the cyclical movement of the drum 7 and timed with that of the clamp mechanisms 17. More exactly, the ejector element 39 is rotatable to the point of passing through the opening 40 in the base 11 of the pocket 8 when occupying the outfeed station 10, so as to engage and distance the product P from the selfsame pocket 8.

Also operating at the outfeed station 10 is an auxiliary ejector element 43 capable of movement between a position distanced from the drum 7, and a position of proximity to the drum 7 assumed when a pocket 8 occupies the outfeed station 10, to the end of engaging the product P in concert with the first ejector element 39 and removing it from the pocket 8 when released by the respective clamp mechanism 17.

In particular, the auxiliary ejector element 43 comprises a main lever 44 of which a first end 44a carries a contact portion 45 designed to engage the product P, and a second end 44b, opposite to the first end 44a, operating in conjunction with cam means 46 in such a manner as to invest the contact portion 45 with cyclical movement toward and away from the drum 7 synchronously with the movement of the clamp mechanisms 17 and of the first ejector elements 39.

In greater detail, the cam means 46 (figure 2) are composed of three profiled wheels 47, 48 and 49 rotating in mutual contact.

A first wheel 47 is rotatable about a respective axis J and connected pivotably, at a point offset from the axis J, to an intermediate point 50 on the main lever 44.

A second wheel 48 is rotatable about a respective axis K and connected pivotably, at a point offset from the axis K, to a first end 51a of an auxiliary lever 51 connected pivotably in its turn by way of a second end 51b to the second end 44b of the main lever 44.

A third wheel 49 rotatable about a respective axis L presents two distinct cam profiles 49a and 49b engaging in contact respectively with the first wheel 47 and with the second wheel 48, and causing the contact portion 45 of the auxiliary ejector element 43 to describe a selected trajectory.

The aforementioned second conveyor 5 consists in a belt 52, looped around at least two pulleys 53a and 53b with horizontal axes of rotation. As shown in figure 2, a first pulley 53a is aligned with the outfeed station 10 and coincides with a curved portion 54 of the path described by the belt 52.

The conveyor 5 is equipped with a plurality of pairs of appendages 55a and 55b spaced apart one from another and projecting from the belt 52 in such a way as to establish a plurality of transfer pockets 55 positionable to receive the products P ejected from the pockets 8 of the drum 7. The two appendages 55a and 55b of each pair are attached to the belt 52 independently of one another in such a way that when advancing along the curved portion 54 of the conveying path, they will project radially from the axis of the first pulley 53a and combine one with another to present an opening into which the product P is insertable. In passing from the curved portion 54 to the flat portion of the belt loop, the two appendages 55a and 55b of each pair are drawn together and the product P is retained stably on the belt 5.

The wrapping machine 3 further comprises feed means of conventional embodiment, hence neither described nor illustrated, serving to supply a sheet F of wrapping material that is advanced and tensioned along a path substantially parallel to the predetermined transfer path B, passing between the drum 7 and the auxiliary ejector element 43 at the outfeed station 10.

More exactly, the sheet F is offered to the face of the product P opposite to that in contact with the base 11 of the pocket 8 currently occupying the station 10.

The operation of the wrapping machine, structured in the manner described above, is as follows.

A product P carried by the first conveyor 2 will reach the infeed station 9 at the same moment as a pocket 8 is occupying the selfsame station 9, the movement of the pockets being synchronized with that of the conveyor 2 in conventional manner.

The first synchronizing means, which act on the connecting shaft 16 and the control rod 24 of each pocket 8, will cause the three clamp elements 18a, 18b and 34 of the pocket 8 occupying the infeed station 9 to spread apart.

The product P is taken up on the base 11 of the pocket 8 and, as the drum 7 is set in rotation, the three clamp elements 18a, 18b and 34 are caused by first synchronizing means to close in around the product P, thus aligning it centrally and pinning it within the pocket 8 as the pocket 8 itself is rotated toward the inner radial position.

Once the pocket 8 and the product P it contains are brought into the outfeed station 10, the first synchronizing means will cause the pocket 8 to rotate toward the outer radial position, in which the base 11 is disposed parallel to the conveyor belt 52, and the three clamp elements 18a, 18b and 34 are spread apart.

The product P now enters into contact with the wrapping sheet F located between the drum 7 and the second conveyor 5.

At the same time, the arm 41 of the first ejector element 39 associated with the pocket 8 in question is caused by the second synchronizing means to rotate, and the relative contact plate 42 to pass through the opening 40 in the base 11, whilst the auxiliary ejector element 43 assumes the position of proximity to the drum 7, thereby supporting the product P and causing the wrapping sheet F to be gripped between the product P and the relative contact portion 45.

The product P is thus held between the contact plate 42 of the ejector element 39 and the contact portion 45 of the auxiliary ejector element 43.

The auxiliary ejector element 43 is then lowered, so that the product P and the relative portion of the wrapping sheet F are slotted into the transfer pocket 55 of the belt 52 beneath, whereupon the two appendages 55a and 55b of the pocket 55 will draw together and flatten the sheet F against the sides of the product P.

The products P are thus partially wrapped when inserted into the transfer pockets 55, before being directed along the transfer path B toward further manufacturing devices of conventional type not described in the present specification.

The present invention has important advantages.

First and foremost, the clamp elements of each pocket allow the products to be conveyed in rigid association with the pocket, so that there is no sliding contact with fixed parts of the device. This helps considerably to reduce the likelihood of damage to the products advancing along the line.

In addition, the symmetrical structure of the clamp elements will ensure that each product is centred in the corresponding pocket of the drum, also in relation to the sheet of wrapping paper positioned at the outfeed station and in relation to the transfer pocket. The positioning of the paper is therefore more precise, and repeatable uniformly for all products wrapped.

Lastly, there are the aforementioned advantages of using clamp elements with replaceable contact portions, which allow products of different shapes and sizes to be handled.

## Claims

1. A device for taking up, holding and transferring products, comprising a drum (7) rotatable about a relative axis (X), also a plurality of pockets (8) afforded by the drum (7), arranged around the axis (X) of rotation and accommodating products (P) transferable by rotation of the drum (7) between an infeed station (9) and an outfeed station (10), **characterized**
**in that** it comprises a plurality of clamp mechanisms (17) each actively associated with a respective pocket (8) and capable of movement relative to the pocket (8) between a position distanced from the pocket (8), such as will allow a single product (P) to be introduced at the infeed station (9) and removed at the outfeed station (10), and a position of proximity to the pocket (8) in which the product (P) is associated rigidly with the pocket (8) during the transfer, also first means by which to synchronize the action of the clamp mechanisms (17) with the rotation of the drum (7) in such a manner that the movement of the selfsame clamp mechanisms (17) will obey a law of motion dictated by the cyclical movement of the drum (7), and also in that each pocket (8) is hinged to the drum (7) and capable of angular movement between an inner radial position of minimal radial encumbrance, assumed during the transfer movement, and an outer radial position with respect to the drum, assumed when in alignment with the infeed station (9) and the outfeed station (10) to facilitate the insertion and removal of a product (P).

2. A device as in claim 1, wherein the axis of rotation (X) is horizontal, the infeed station (9) occupies a top portion (7a) of the drum (7) and the outfeed station (10) occupies a bottom portion (7b) of the drum (7).

3. A device as in claim 1 or 2, wherein the pocket (8) comprises a base (11) of substantially rectangular geometry presenting first and second sides (12a, 12b) parallel to the axis (X) of rotation, and third and fourth sides (13a, 13b) normal to the axis of rotation (X), also a side wall (14) projecting perpendicularly from the first side (12a) of the base (11) and combining with the base to form a concavity directed away from the axis (X).

4. A device as in claim 3, wherein each clamp mechanism (17) comprises a first clamp element (18a) and a second clamp element (18b) operating respectively on the third side (13a) and on the fourth side (13b) presented by the base (11) of the pocket (8).

5. A device as in claim 4, wherein each of the clamp elements (18a, 18b) presents a contact portion (19a, 19b) matched to the shape of the handled product (P), also a link arm (20a, 20b) connected rigidly to the contact portion (19a, 19b) and anchored pivotably to the pocket (8) in such a way as to allow rotation between the position distanced from the pocket and the position of proximity to the pocket.

6. A device as in claim 5, wherein the contact portions (19a, 19b) are connected removably to the relative arms (20a, 20b), and replaceable thus with contact portions (19a, 19b) of other geometry able to handle products (P) of different shape.

7. A device as in claim 5, further comprising a first synchronizing linkage (23) operating between the link arms (20a, 20b), and a control rod (24) connected to the first synchronizing linkage (23), by which the arms (20a, 20b) are caused to rotate simultaneously.

8. A device as in claim 7, wherein the clamp mechanism (17) comprises a third clamp element (34) operating along the second side (12b) presented by the base (11) of the pocket (8) and serving to pin the product (P) against the side wall (14).

9. A device as in claim 8, further comprising a second synchronizing linkage (37), operating in conjunction with the third clamp element (34) and the first clamp element (18a) and/or the second clamp element (18b), such as will allow the pivoting movements of the arms (20a, 20b) and the movement of the third clamp element (34) to be generated simultaneously by the control rod (24).

10. A device as in claim 3, further comprising a plurality of first ejector elements (39), each located on the drum (7) near to a relative pocket (8) and capable of movement between a position distanced from the pocket (8) and a position of interaction with the pocket (8), inserted through an opening (40) afforded by the base (11) in such a way as engage and push the product (P), assumed when the pocket (8) occupies the outfeed station (10).

11. A device as in claim 10, further comprising second synchronizing means acting on the ejector elements (39) and on the drum (7) in such a way that the movement of the ejector elements (39) will obey a law of motion dictated by the cyclical movement of the drum (7) and occur synchronously with the movement of the clamp mechanisms (17).

12. A device as in claim 10, wherein each ejector element (39) presents an arm (41) hinged to the drum (7) by a first end (41a), also a contact plate (42) associated with a second end (41b) of the arm (41), opposite to the first end (41a), and insertable through the opening (40) in the base (11).

13. A rotary wrapping machine including a device for taking up, holding and transferring products, wherein the device (4) comprises a drum (7) rendered rotatable about a relative axis (X), a plurality of pockets (8) afforded by the drum (7), arranged around the axis of rotation (X) and accommodating products (P) transferable by rotation of the drum (7) between an infeed station (9) and an outfeed station (10), a plurality of transfer pockets (55) capable of movement along a predetermined path (B) passing through the outfeed station (10), in such a way as to receive the products (P) removed from the pockets (8) of the drum (7), also feed means capable of placing a sheet of paper (F) at the outfeed station (10), between the drum (7) and the plurality of transfer pockets (55), in such a way as to envelop the product (P) at least in part when released to one of the transfer pockets (55), **characterized**
**in that** it comprises a plurality of clamp mechanisms (17) each actively associated with a respective pocket (8) and capable of movement relative to the pocket (8) between a position distanced from the pocket (8), such as will allow a single product (P) to be introduced at the infeed station (9) and removed at the outfeed station (10), and a position of proximity to the pocket (8) in which the product (P) is associated rigidly with the pocket (8) during the transfer, also first means by which to synchronize the action of the clamp mechanisms (17) with the rotation of the drum (7) in such a manner that the movement of the selfsame clamp mechanisms (17) will obey a law of motion dictated by the cyclical movement of the drum (7), and in that the pocket (8) is capable of angular movement between an inner radial position, assumed in order to minimize its radial encumbrance during the transfer movement, and an outer radial position, with respect to the drum, assumed when in alignment with the infeed station (9) or the outfeed station (10) to facilitate the insertion or removal of a product (P).

14. A machine as in claim 13, further comprising an auxiliary ejector element (43) operating at the outfeed station (10), capable of movement between a position distanced from the drum (7), and a position of proximity to the drum (7), assumed when a pocket (8) occupies the outfeed station (10), to the end of engaging the product (P) and the sheet of paper (F) in concert with the first ejector element (39) of the relative pocket (8) and inserting them into one of the transfer pockets (55).

15. A machine as in claim 14, wherein the auxiliary ejector element (43) comprises a main lever (44) presenting a first end (44a), a second end (44b) opposite to the first end (44a), also a contact portion (45) mounted to the first end (44a) of the lever (44) and positioned to engage the product (P), operating in conjunction with cam means (46) linked to the main lever (44) in such a way as to invest the contact portion (45) with cyclical movement toward and away from the drum (7) synchronously with the movement of the clamp mechanisms (17), the first ejector elements (39) and the transfer pockets (55).

## Patentansprüche

1. Vorrichtung zum Aufnehmen, Halten und Übertragen von Produkten, enthaltend eine Trommel (7), die um eine entsprechende Achse (X) drehbar ist, sowie eine Anzahl von Fächern (8), aufgewiesen von der Trommel (7), angeordnet um die Drehachse (X) und die Produkte (P) aufnehmend, die durch die Umdrehung der Trommel (7) zwischen einer Ladestation (9) und einer Entladestation (10) transferierbar sind, **dadurch gekennzeichnet, dass** sie eine Anzahl von Klemmmechanismen (17) enthält, jeder aktiv einem entsprechenden Fach (8) zugeordnet und in der Lage, eine Bewegung im Verhältnis zu dem Fach (8) auszuführen zwischen einer von dem Fach (8) entfernten Position, so dass es erlaubt ist, an der Ladestation (9) ein einzelnes Produkt (P) einzuschieben und an der Entladestation (10) herauszunehmen, und einer Position der Annäherung an das Fach (8), in welcher das Produkt (P) während des Transfers fest in dem Fach (8) angeordnet ist, sowie auch erste Mittel, durch welche der Betrieb der Klemmmechanismen (17) mit der Umdrehung der Trommel (7) auf solche Weise synchronisiert wird, dass die Bewegung der Klemmmechanismen (17) selbst einem Bewegungsgesetz gehorcht, vorgegeben durch die zyklische Bewegung der Trommel (7), und auch **dadurch**, dass jedes Fach (8) an die Trommel (7) angelenkt und in der Lage ist, eine Winkelbewegung zwischen einer inneren radialen Position des minimalen radialen Platzbedarfs, eingenommen während der Transferbewegung, und einer äusseren radialen Position im Verhältnis zu der Trommel auszuführen, eingenommen, wenn es zu der Ladestation (9) und der Entladestation (10) ausgerichtet ist, um das Einschieben und Herausnehmen eines Produktes (P) zu erleichtern.

2. Vorrichtung nach Patentanspruch 1, bei welcher die Drehachse (X) horizontal ist, die Ladestation (9) einen oberen Abschnitt (7a) der Trommel (7) belegt und die Entladestation (10) einen unteren Abschnitt (7b) der Trommel (7) belegt.

3. Vorrichtung nach Patentanspruch 1 oder 2, bei welcher das Fach (8) einen Boden (11) von im wesentlichen rechteckiger Geometrie enthält, aufweisend erste und zweite Seiten (12a, 12b) parallel zu der Drehachse (X), sowie dritte und vierte Seiten (13a, 13b), die normal zu der Drehachse (X) verlaufen, und schliesslich eine Seitenwand (14), die lotrecht von der ersten Seite (12a) des Bodens (11) hervorsteht und mit dem Boden zusammenwirkt, um eine von der Achse (X) fort gerichtete Konkavität zu bilden.

4. Vorrichtung nach Patentanspruch 3, bei welcher jeder Klemmmechanismus (17) ein erstes Klemmelement (18a) und ein zweites Klemmelement (18b) enthält, die jeweils an der dritten Seite (13a) und an der vierten Seite (13b) arbeiten, die von dem Boden (11) des Faches (8) aufgewiesen sind.

5. Vorrichtung nach Patentanspruch 4, bei welcher jedes der Klemmelemente (18a, 18b) einen Kontaktabschnitt (19a, 19b) aufweist, der sich der Form des zu handhabenden Produktes (P) anpasst, sowie einen Verbindungsarm (20a, 20b), starr angeschlossen an den Kontaktabschnitt (19a, 19b) und drehbar verankert an dem Fach (8) auf solche Weise, dass die Umdrehung zwischen der von dem Fach entfernten Position und der an das Fach angenäherten Position erlaubt ist.

6. Vorrichtung nach Patentanspruch 5, bei welcher die Kontaktabschnitte (19a, 19b) lösbar an die entsprechenden Arme (20a, 20b) angeschlossen und somit austauschbar sind gegen Kontaktabschnitte (19a, 19b) von anderer Geometrie, die geeignet sind, Produkte (P) von unterschiedlicher Form zu handhaben.

7. Vorrichtung nach Patentanspruch 5, weiter enthaltend ein erstes Synchronisiergetriebe (23), das zwischen den Verbindungsarmen (20a, 20b) arbeitet, und eine Antriebsstange (24), angeschlossen an das erste Synchronisiergetriebe (23), durch welche die Arme (20a, 20b) gleichzeitig in Umdrehung versetzt werden.

8. Vorrichtung nach Patentanspruch 7, bei welcher der Klemmmechanismus (17) ein drittes Klemmelement (34) enthält, das entlang der zweiten, von dem Boden (11) des Faches (8) aufgewiesenen Seite (12b) arbeitet und dazu dient, das Produkt (P) gegen die Seitenwand (14) zu drücken.

9. Vorrichtung nach Patentanspruch 8, weiter enthaltend ein zweites Synchronisiergetriebe (37), das zusammen mit dem dritten Klemmelement (34) und dem ersten Klemmelement (18a) und/oder dem zweiten Klemmelement (18b) arbeitet, so dass die Drehbewegungen der Arme (20a, 20b) erlaubt sind und die Bewegung des dritten Klemmelementes (34) gleichzeitig durch die Antriebsstange (24) hervorgerufen wird.

10. Vorrichtung nach Patentanspruch 3, weiter enthaltend eine Anzahl von ersten Ausstosselementen (39), jedes angeordnet an der Trommel (7) dicht an einem entsprechenden Fach (8) und in der Lage, eine Bewegung zwischen einer von dem Fach (8) entfernten Position und einer Position des Zusammenwirkens mit dem Fach (8) auszuführen, eingeschoben durch eine von dem Boden (11) aufgewiesene Öffnung (40) auf solche Weise, dass das Produkt (P) gegriffen und herausgeschoben wird, wenn das Fach (8) die Entladestation (10) belegt.

11. Vorrichtung nach Patentanspruch 10, weiter enthaltend zweite Synchronisiermittel, die auf die Ausstosselemente (39) und auf die Trommel (7) auf solche Weise wirken, dass die Bewegung der Ausstosselemente (39) einem Bewegungsgesetz gehorcht, vorgegeben durch die zyklische Bewegung der Trommel (7) und synchron mit der Bewegung der Klemmmechanismen (17) erfolgend.

12. Vorrichtung nach Patentanspruch 10, bei welcher jedes Ausstosselement (39) einen Arm (41) aufweist, der mit einem ersten Ende (41a) an die Trommel (7) angelenkt ist, sowie eine Kontaktplatte (42), die dem zweiten Ende (41b) des Armes (41) entgegengesetzt von dem ersten Ende (41a) zugeordnet und durch die Öffnung (40) in dem Boden (11) einschiebbar ist.

13. Rotierende Einwickelmaschine, enthaltend eine Vorrichtung zum Aufnehmen, Halten und Übertragen von Produkten, bei welcher die Vorrichtung (4) eine Trommel (7) enthält, die um eine entsprechende Achse (X) drehbar ist, sowie eine Anzahl von Fächern (8), aufgewiesen von der Trommel (7), angeordnet um die Drehachse (X) und die Produkte (P) aufnehmend, die durch Umdrehung der Trommel (7) zwischen einer Ladestation (9) und einer Entladestation (10) transferierbar sind, eine Anzahl von Transferfächern (55), die eine Bewegung ausführen können entlang einer vorgegebenen Bahn (B), die durch die Entladestation (10) verläuft, und zwar auf solche Weise, dass sie die aus den Fächern (8) der Trommel (7) herausgenommenen Produkte (P) übernehmen, sowie Zuführmittel, in der Lage, einen Bogen Papier (F) an der Entladestation (10) zwischen der Trommel (7) und der Anzahl von Transferfächern (55) auf solche Weise anzuordnen, dass das Produkt (P) wenigstens teilweise umwickelt ist, wenn es an eins der Transferfächer (55) freigegeben wird, **dadurch gekennzeichnet, dass** sie eine Anzahl von Klemmmechanismen (17) enthält, jedes aktiv einem jeweiligen Fach (8) zugeordnet und in der Lage, eine Bewegung im Verhältnis zu dem Fach (8) auszuführen zwischen einer von dem Fach (8) entfernten Position, so dass es erlaubt ist, an der Ladestation (9) ein einzelnes Produkt (P) einzuschieben und an der Entladestation (10) herauszunehmen, und einer Position der Annäherung an das Fach (8), in welcher das Produkt (P) während des Transfers fest in dem Fach (8) angeordnet ist, sowie auch erste Mittel, durch welche der Betrieb der Klemmmechanismen (17) mit der Umdrehung der Trommel (7) auf solche Weise synchronisiert ist, dass die Bewegung der Klemmmechanismen (17) selbst einem Bewegungsgesetz gehorcht, vorgegeben durch die zyklische Bewegung der Trommel (7), und **dadurch**, dass jedes Fach (8) in der Lage ist, eine Winkelbewegung zwischen einer inneren radialen Position, eingenommen, um den radialen Platzbedarfs während der Transferbewegung zu minimieren, und einer äusseren radialen Position im Verhältnis zu der Trommel auszuführen, eingenommen, wenn es sich in Ausrichtung zu der Ladestation (9) oder der Entladestation (10) befindet, um das Einschieben und Herausnehmen eines Produktes (P) zu erleichtern.

14. Maschine nach Patentanspruch 13, weiter enthaltend ein zusätzliches Ausstosselement (43), das an der Entladestation (10) arbeitet und in der Lage ist, eine Bewegung zwischen einer von der Trommel (7) entfernten Position und einer Position der Annäherung an die Trommel (7) auszuführen, eingenommen, wenn ein Fach (8) die Entladestation (10) belegt, um das Produkt (P) und den Bogen Papier (F) in Übereinstimmung mit dem ersten Ausstosselement (39) des entsprechenden Faches (8) zu greifen und es in eins der Transferfächer (55) einzuschieben.

15. Maschine nach Patentanspruch 14, bei welcher das zusätzliche Ausstosselement (43) einen Haupthebel (44) enthält, der ein erstes Ende (44a), ein zweites Ende (44b), gegenüberliegend dem ersten Ende (44a), sowie einen Kontaktabschnitt (45) aufweist, montiert an dem ersten Ende (44a) des Hebels (44), positioniert zum Greifen des Produktes (P) und mit Nockenmittel (46) zusammenarbeitend, die an den Haupthebel (44) auf solche Weise angeschlossen sind, dass dem Kontaktabschnitt (45) eine zyklische Bewegung zu der Trommel (7) hin und von dieser fort verliehen wird, und zwar synchron mit der Bewegung der Klemmmechanismen (17), der ersten Ausstosselemente (39) und der Transferfächer (55).

## Revendications

1. Un dispositif pour prélever, bloquer et transférer des articles, comprenant un tambour (7) pouvant tourner autour d'un axe (X) respectif, ainsi qu'une pluralité de poches (8) présentées par le tambour (7), disposées autour de l'axe (X) de rotation et logeant des articles (P) pouvant être transférés, par le biais de la rotation du tambour (7), entre une station de chargement (9) et une station de déchargement (10), ledit dispositif étant **caractérisé en ce qu'**il comprend une pluralité d'organes de blocage (17) qui sont chacun associés opérationnellement à une poche (8) respective et mobiles entre une position éloignée de la poche (8), pour permettre l'introduction d'un article (P) au niveau de la station de chargement (9) et l'extraction de ce même article au niveau de la station de déchargement (10), et une position proche de la poche (8) dans laquelle l'article (P) est associé de façon rigide à la poche (8) durant le transfert, ainsi que des premiers moyens destinés à synchroniser l'action des organes de blocage (17) avec la rotation du tambour (7) de manière à ce que le mouvement des organes de blocage (17) eux-mêmes obéisse à une loi de mouvement dictée par le mouvement cyclique du tambour (7), et, aussi, **en ce que** chaque poche (8) est articulée au tambour (7) et est mobile angulairement entre une position radiale intérieure d'encombrement radial minimum, prise durant le mouvement de transfert, et une position radiale extérieure, par rapport au tambour, prise quand elle est alignée avec la station de chargement (9) et la station de déchargement (10) afin de faciliter l'introduction et l'extraction d'un article (P).

2. Le dispositif selon la revendication 1, **caractérisé en ce que** l'axe de rotation (X) est horizontal, la station de chargement (9) occupe une portion supérieure (7a) du tambour (7) et la station de déchargement (10) occupe une portion inférieure (7b) du tambour (7).

3. Le dispositif selon la revendication 1 ou 2, **caractérisé en ce que** la poche (8) comprend une base (11), de forme essentiellement rectangulaire, présentant des premier et deuxième côtés (12a, 12b) parallèles à l'axe (X) de rotation, et des troisième et quatrième côtés (13a, 13b) perpendiculaires à l'axe de rotation (X), ainsi qu'une paroi latérale (14) se projetant perpendiculairement à partir du premier côté (12a) de la base (11) et se combinant avec la base elle-même pour former une concavité orientée dans une direction opposée à l'axe (X).

4. Le dispositif selon la revendication 3, **caractérisé en ce que** chaque organe de blocage (17) comprend un premier élément de blocage (18a) et un second élément de blocage (18b) opérant, respectivement, sur le troisième côté (13a) et sur le quatrième côté (13b) présentés par la base (11) de la poche (8).

5. Le dispositif selon la revendication 4, **caractérisé en ce que** chacun des éléments de blocage (18a, 18b) présente une portion de contact (19a, 19b) conformée de façon complémentaire à la forme de l'article (P) traité, ainsi qu'un bras de liaison (20a, 20b) associé de façon rigide à la portion de contact (19a, 19b) et fixé de façon pivotante à la poche (8) de manière à permettre la rotation entre la position éloignée de la poche et la position proche de la poche.

6. Le dispositif selon la revendication 5, **caractérisé en ce que** les portions de contact (19a, 19b) sont associées de façon amovible aux bras (20a, 20b) respectifs, et peuvent donc être remplacées par des portions de contact (19a, 19b) ayant une autre forme, à même de traiter des articles (P) ayant une forme différente.

7. Le dispositif selon la revendication 5, **caractérisé en ce qu'**il comprend en outre un premier mécanisme articulé de synchronisation (23) opérant entre les bras de liaison (20a, 20b), et une tige de commande (24) reliée au premier mécanisme articulé de synchronisation (23), destinés à mettre en rotation simultanée les bras (20a, 20b).

8. Le dispositif selon la revendication 7, **caractérisé en ce que** l'organe de blocage (17) comprend un troisième élément de blocage (34) opérant le long du deuxième côté (12b) présenté par la base (11) de la poche (8) et servant à bloquer l'article (P) contre la paroi latérale (14).

9. Le dispositif selon la revendication 8, **caractérisé en ce qu'**il comprend en outre un second mécanisme articulé de synchronisation (37), opérant en association avec le troisième élément de blocage (34) et le premier élément de blocage (18a) et/ou le second élément de blocage (18b), destiné à permettre la détermination simultanée des mouvements de pivotement des bras (20a, 20b) et du mouvement du troisième élément de blocage (34) par l'intermédiaire de la tige de commande (24).

10. Le dispositif selon la revendication 3, **caractérisé en ce qu'**il comprend en outre une pluralité de premiers éléments expulseurs (39), qui sont chacun situés sur le tambour (7) à côté d'une poche (8) respective et mobiles entre une position éloignée de la poche (8) et une position d'interaction avec ladite poche (8), introduits à travers une ouverture (40) présentée par la base (11) de manière à assujettir et à pousser l'article (P), prise quand la poche (8) elle-même occupe la station de déchargement (10).

11. Le dispositif selon la revendication 10, **caractérisé en ce qu'**il comprend en outre des seconds moyens de synchronisation agissant sur les éléments expulseurs (39) et sur le tambour (7) de manière à ce que le mouvement des éléments expulseurs (39) eux-mêmes obéisse à une loi de mouvement dictée par le mouvement cyclique du tambour (7) et ait lieu en synchronisation avec le mouvement des organes de blocage (17).

12. Le dispositif selon la revendication 10, **caractérisé en ce que** chaque élément expulseur (39) présente un bras (41) articulé au tambour (7) au niveau d'une première extrémité (41a), ainsi qu'une plaque de contact (42) associée à une seconde extrémité (41b) du bras (41), opposée à la première extrémité (41a), et pouvant être introduite à travers l'ouverture (40) de la base (11).

13. Une machine à envelopper rotative incluant un dispositif pour prélever, bloquer et transférer des articles, dans laquelle le dispositif (4) comprend un tambour (7) pouvant tourner autour d'un axe (X) respectif, une pluralité de poches (8) présentées par le tambour (7), disposées autour de l'axe de rotation (X) et logeant des articles (P) pouvant être transférés, par le biais de la rotation du tambour (7), entre une station de chargement (9) et une station de déchargement (10), une pluralité de poches de transfert (55) mobiles le long d'un parcours (B) prédéterminé passant à travers la station de déchargement (10) de manière à recevoir les articles (P) extraits des poches (8) du tambour (7), ainsi que des moyens d'alimentation à même de placer une feuille de papier (F) au niveau de la station de déchargement (10), entre le tambour (7) et la pluralité de poches de transfert (55), de manière à envelopper l'article (P) au moins en partie quand celui-ci est déposé dans une des poches de transfert (55), ladite machine étant **caractérisée en ce qu'**elle comprend une pluralité d'organes de blocage (17) qui sont chacun associés opérationnellement à une poche (8) respective et mobiles, par rapport à ladite poche (8), entre une position éloignée de la poche (8), pour permettre l'introduction d'un article (P) au niveau de la station de chargement (9) et l'extraction de ce même article au niveau de la station de déchargement (10), et une position proche de la poche (8) dans laquelle l'article (P) est associé de façon rigide à la poche (8) durant le transfert, ainsi que des premiers moyens destinés à synchroniser l'action des organes de blocage (17) avec la rotation du tambour (7) de manière à ce que le mouvement des organes de blocage (17) eux-mêmes obéisse à une loi de mouvement dictée par le mouvement cyclique du tambour (7), et **en ce que** la poche (8) est mobile angulairement entre une position radiale intérieure, prise pour réduire son encombrement radial durant le mouvement de transfert, et une position radiale extérieure, par rapport au tambour, prise quand elle est alignée avec la station de chargement (9) ou la station de déchargement (10) afin de faciliter l'introduction ou l'extraction d'un article (P).

14. La machine selon la revendication 13, **caractérisée en ce qu'**elle comprend en outre un élément expulseur auxiliaire (43) opérant au niveau de la station de déchargement (10), mobile entre une position éloignée du tambour (7), et une position proche du tambour (7), prise quand une poche (8) occupe la station de déchargement (10), de manière à assujettir l'article (P) et la feuille de papier (F) de concert avec le premier élément expulseur (39) de la poche (8) respective et à les introduire dans une des poches de transfert (55).

15. La machine selon la revendication 14, **caractérisée en ce que** l'élément expulseur auxiliaire (43) comprend un levier principal (44) présentant une première extrémité (44a), une seconde extrémité (44b) opposée à la première extrémité (44a), ainsi qu'une portion de contact (45) montée sur la première extrémité (44a) du levier (44) et positionnée pour assujettir l'article (P), en opérant en association avec des moyens à cames (46) reliés au levier principal (44) de manière à imprimer à la portion de contact (45) un mouvement cyclique vers et à l'opposé du tambour (7) en synchronisation avec le mouvement des organes de blocage (17), des premiers éléments expulseurs (39) et des poches de transfert (55).
